# EUROPEAN PATENT SPECIFICATION

(11) **EP 3 816 922 B1**
(45) Date of publication and mention of the grant of the patent: **08.10.2025**
(21) Application number: 19875980.5
(22) Date of filing: 29.08.2019
(51) Int. Cl.: G06Q 40/00, G06Q 20/38, G06Q 20/40, G06Q 30/06

(54) **BLOCKCHAIN-BASED TRANSACTION PROCESSING METHOD AND APPARATUS, AND ELECTRONIC DEVICE**
VERFAHREN UND VORRICHTUNG ZUR VERARBEITUNG EINER BLOCKCHAIN-BASIERTEN TRANSAKTION UND ELEKTRONISCHE VORRICHTUNG
PROCÉDÉ ET APPAREIL DE TRAITEMENT DE TRANSACTIONS BASÉES SUR UNE CHAÎNE DE BLOCS ET DISPOSITIF ÉLECTRONIQUE

(30) Priority: 25.10.2018 CN 201811253445
(43) Date of publication of application: 05.05.2021
(73) Proprietor: Antchain Technology Pte. Ltd., Singapore 189773 (SG)
(72) Inventor: WANG, Jiyuan, Hangzhou, Zhejiang 310000 (CN); YAN, Xuebing, Hangzhou, Zhejiang 31000 (CN)
(74) Representative: Goddar, Heinz J.
(86) International application number: PCT/CN2019/103236
(87) International publication number: WO 2020/082892

(56) References cited:
- CN-A- 106 815 722
- CN-A- 106 815 722
- CN-A- 107 993 147
- CN-A- 108 053 211
- CN-A- 108 053 211
- CN-A- 108 053 211
- CN-A- 109 598 598
- US-A1- 2017 212 781

## Description

### TECHNICAL FIELD

One or more embodiments of the present specification relate to the field of blockchain technologies, and in particular, to blockchain-based transaction processing methods, apparatuses, and electronic devices.

### BACKGROUND

A blockchain technology, also referred to as a distributed ledger technology, is an emerging technology in which several computing devices jointly participate in "bookkeeping" to maintain a complete distributed database. The blockchain technology features decentralization and transparency, each computing device can record data in the database, and the data can be synchronized rapidly between the computing devices. Therefore, the blockchain technology has been widely applied to many fields to build frameworks of decentralized systems and to incorporate various execution programs into a distributed blockchain database for automatic execution.
CN 106 815 722 A relates to an information processing method and device based on a blockchain. The disclosed method comprises the following steps: setting interaction serial numbers nonce for processed interaction information, wherein the nonce is nonredundant in a preset interaction serial number scope, and sending the interaction information with the set interaction serial numbers nonce to the blockchain.

### SUMMARY

The invention is defined in the independent claims. Advantageous modifications are set forth in the dependent claims.

The present specification further provides a blockchain-based transaction processing method, applied to a client device, where the method includes: determining whether transactions initiated by a user through a user account include a plurality of transactions that need to be executed in parallel; if the transactions initiated by the user through the user account include a plurality of transactions that need to be executed in parallel, adding the same group identifier to the plurality of transactions; and publishing the plurality of transactions in a blockchain, so that a node device in the blockchain executes the plurality of transactions with the same group identifier in parallel after processing the transaction published by the client device.

Optionally, the plurality of transactions that need to be executed in parallel include a plurality of transactions of the same transaction type.

Optionally, the method further includes: if the transactions initiated by the user through the user account include a plurality of transaction groups with each including a plurality of transactions that need to be executed in parallel, determining an execution order of the plurality of transaction groups; and adding grouping identifiers that indicate the execution order of the plurality of transaction groups to the plurality of transaction groups.

Optionally, a Nonce list corresponding to the user account is maintained in the blockchain, the Nonce list includes a plurality of Nonce records, and the Nonce record includes a group identifier and a Nonce value; and the adding the same group identifier to the plurality of transactions includes: obtaining available Nonce records that include the same group identifier for the plurality of transactions from the Nonce list, and respectively adding the obtained available Nonce records to the plurality of transactions.

Optionally, before the obtaining available Nonce records that include the same group identifier for the plurality of transactions from the Nonce list, the method further includes: in response to an initialization instruction for the client device, obtaining the Nonce list maintained in the blockchain, and locally maintaining the obtained Nonce list on the client device; and the obtaining available Nonce records that include the same group identifier for the plurality of transactions from the Nonce list includes: obtaining the available Nonce records that include the same group identifier for the plurality of transactions from the Nonce list locally maintained on the client device.

Optionally, the Nonce records in the Nonce list locally maintained on the client device are marked as available by default; and the method further includes: marking the available Nonce records as unavailable in the Nonce list after obtaining the available Nonce records for the plurality of transactions from the Nonce list locally maintained on the client device.

Optionally, the method further includes: determining whether a notification message indicating that the transaction is processed is received from the node device; and if yes, monotonically increasing a Nonce value in the available Nonce record based on predetermined amplitude, and re-marking the available Nonce record as available in the Nonce list after monotonically increasing the Nonce value.

Optionally, the publishing the plurality of transactions in a blockchain, so that a node device in the blockchain executes the plurality of transactions with the same group identifier in parallel after processing the transaction published by the client device includes: publishing the plurality of transactions in the blockchain, so that the node device in the blockchain matches the available Nonce record in the transaction published by the client device with the Nonce record in the Nonce list, and when the available Nonce record matches any target Nonce record in the Nonce list, processes the transaction, and executes the plurality of transactions with the same group identifier in processed transactions in parallel.

Optionally, the client device is a multi-threaded client device, and the quantity of Nonce records in the Nonce list indicates a capability of executing transactions of the user account in parallel.

Optionally, the Nonce record further includes an index identifier of the Nonce record.

The present specification further provides a blockchain-based transaction processing method, applied to a node device in a blockchain, where the method includes: receiving transactions that are initiated by a user through a user account and sent by a client device, where a group identifier is added to the transaction by the client device; determining whether the transactions sent by the client device include a plurality of transactions with the same group identifier, where the same group identifier is added by the client device when determining that the plurality of transactions need to be executed in parallel; and if yes, executing the plurality of transactions in parallel after the plurality of transactions are processed.

Optionally, the transactions sent by the client device include a plurality of transaction groups with each including a plurality of transactions with the same group identifier, and group identifiers added by the client device to the plurality of transaction groups indicate an execution order of the plurality of transaction groups; and the method further includes: if the transactions sent by the client device include the plurality of transaction groups with each including a plurality of transactions with the same group identifier, executing the plurality of transaction groups in the execution order indicated by the group identifiers of the plurality of transaction groups.

Optionally, a Nonce list set is maintained in the blockchain, the Nonce list set includes Nonce lists corresponding to several user accounts, the Nonce list includes a plurality of Nonce records, the Nonce record includes a group identifier and a Nonce value, and the group identifier added to the transaction sent by the client device is included in an available Nonce record obtained by the client device from a Nonce list corresponding to the user account; and the method further includes: matching the available Nonce record added to the transaction sent by the client device with a Nonce record in the Nonce list that corresponds to the user account and is maintained in the blockchain; and processing the transaction if the available Nonce record matches any target Nonce record in the Nonce list.

Optionally, the method further includes: if the available Nonce record matches the any target Nonce record in the Nonce list, monotonically increasing a Nonce value in the target Nonce record based on predetermined amplitude; and returning a notification message indicating that the transaction is processed to the client device.

Optionally, the Nonce record further includes an index identifier of the Nonce record.

The present specification further provides a blockchain-based transaction processing apparatus, applied to a client device, where the apparatus includes: a first determining module, configured to determine whether transactions initiated by a user through a user account include a plurality of transactions that need to be executed in parallel; an addition module, configured to: if the transactions initiated by the user through the user account include a plurality of transactions that need to be executed in parallel, add the same group identifier to the plurality of transactions; and a publication module, configured to publish the plurality of transactions in a blockchain, so that a node device in the blockchain executes the plurality of transactions with the same group identifier in parallel after processing the transaction published by the client device.

Optionally, the plurality of transactions that need to be executed in parallel include a plurality of transactions of the same transaction type.

Optionally, the addition module is further configured to: if the transactions initiated by the user through the user account include a plurality of transaction groups with each including a plurality of transactions that need to be executed in parallel, determine an execution order of the plurality of transaction groups; and add grouping identifiers that indicate the execution order of the plurality of transaction groups to the plurality of transaction groups.

Optionally, a Nonce list corresponding to the user account is maintained in the blockchain, the Nonce list includes a plurality of Nonce records, and the Nonce record includes a group identifier and a Nonce value; and the addition module is configured to: obtain available Nonce records that include the same group identifier for the plurality of transactions from the Nonce list, and respectively add the obtained available Nonce records to the plurality of transactions.

Optionally, the addition module is further configured to: before obtaining the available Nonce records that include the same group identifier for the plurality of transactions from the Nonce list, in response to an initialization instruction for the client device, obtain the Nonce list maintained in the blockchain, and locally maintain the obtained Nonce list on the client device; and obtain the available Nonce records that include the same group identifier for the plurality of transactions from the Nonce list locally maintained on the client device.

Optionally, the Nonce records in the Nonce list locally maintained on the client device are marked as available by default; and the addition module is further configured to: mark the available Nonce records as unavailable in the Nonce list after obtaining the available Nonce records for the plurality of transactions from the Nonce list locally maintained on the client device.

Optionally, the addition module is further configured to: determine whether a notification message indicating that the transaction is processed is received from the node device; and if yes, monotonically increase a Nonce value in the available Nonce record based on predetermined amplitude, and re-mark the available Nonce record as available in the Nonce list after monotonically increasing the Nonce value.

Optionally, the publication module is further configured to: publish the plurality of transactions in the blockchain, so that the node device in the blockchain matches the available Nonce record in the transaction published by the client device with the Nonce record in the Nonce list, and when the available Nonce record matches any target Nonce record in the Nonce list, processes the transaction, and executes the plurality of transactions with the same group identifier in processed transactions in parallel.

Optionally, the client device is a multi-threaded client device, and the quantity of Nonce records in the Nonce list indicates a capability of executing transactions of the user account in parallel.

Optionally, the Nonce record further includes an index identifier of the Nonce record.

The present specification further provides a blockchain-based transaction processing apparatus, applied to a node device in a blockchain, where the apparatus includes: a receiving module, configured to receive transactions that are initiated by a user through a user account and sent by a client device, where a group identifier is added to the transaction by the client device; a second determining module, configured to determine whether the transactions sent by the client device include a plurality of transactions with the same group identifier, where the same group identifier is added by the client device when determining that the plurality of transactions need to be executed in parallel; and an execution module, configured to: if yes, execute the plurality of transactions in parallel after the plurality of transactions are processed.

Optionally, the transactions sent by the client device include a plurality of transaction groups with each including a plurality of transactions with the same group identifier, and group identifiers added by the client device to the plurality of transaction groups indicate an execution order of the plurality of transaction groups; and the execution module is further configured to: if the transactions sent by the client device include the plurality of transaction groups with each including a plurality of transactions with the same group identifier, execute the plurality of transaction groups in the execution order indicated by the group identifiers of the plurality of transaction groups.

Optionally, a Nonce list set is maintained in the blockchain, the Nonce list set includes Nonce lists corresponding to several user accounts, the Nonce list includes a plurality of Nonce records, the Nonce record includes a group identifier and a Nonce value, and the group identifier added to the transaction sent by the client device is included in an available Nonce record obtained by the client device from a Nonce list corresponding to the user account; and the execution module is further configured to: match the available Nonce record added to the transaction sent by the client device with a Nonce record in the Nonce list that corresponds to the user account and is maintained in the blockchain; and process the transaction if the available Nonce record matches any target Nonce record in the Nonce list.

Optionally, the execution module is further configured to: if the available Nonce record matches the any target Nonce record in the Nonce list, monotonically increase a Nonce value in the target Nonce record based on predetermined amplitude; and return a notification message indicating that the transaction is processed to the client device.

Optionally, the Nonce record further includes an index identifier of the Nonce record.

The present specification further provides an electronic device, including: a processor; and a memory, configured to store a machine-executable instruction, where by reading and executing the machine-executable instruction that is stored in the memory and corresponds to blockchain-based transaction processing control logic, the processor is promoted to perform the following operations: determining whether transactions initiated by a user through a user account include a plurality of transactions that need to be executed in parallel; if the transactions initiated by the user through the user account include a plurality of transactions that need to be executed in parallel, adding the same group identifier to the plurality of transactions; and publishing the plurality of transactions in a blockchain, so that a node device in the blockchain executes the plurality of transactions with the same group identifier in parallel after processing the transaction published by the client device.

The present specification further provides an electronic device, including: a processor; and a memory, configured to store a machine-executable instruction, where by reading and executing the machine-executable instruction that is stored in the memory and corresponds to blockchain-based transaction processing control logic, the processor is promoted to perform the following operations: receiving transactions that are initiated by a user through a user account and sent by a client device, where a group identifier is added to the transaction by the client device; determining whether the transactions sent by the client device include a plurality of transactions with the same group identifier, where the same group identifier is added by the client device when determining that the plurality of transactions need to be executed in parallel; and if yes, executing the plurality of transactions in parallel after the plurality of transactions are processed.

In the previous embodiments, the client device adds the same group identifier to a plurality of transactions that need to be executed in parallel and are initiated by the user, so that the node device in the blockchain can execute the plurality of transactions with the same group identifier in parallel after processing the transaction initiated by the user. As such, the capability of executing transactions of an account in parallel on the client device can be improved.

### BRIEF DESCRIPTION OF DRAWINGS

FIG. 1 is a schematic diagram illustrating performing replay attack detection for a transaction, according to an example embodiment;
FIG. 2 is a flowchart illustrating a blockchain-based transaction processing method, according to an example embodiment;
FIG. 3 is a schematic structural diagram of a Nonce list set maintained in a blockchain, according to an example embodiment;
FIG. 4 is another schematic diagram illustrating performing replay attack detection for a transaction, according to an example embodiment;
FIG. 5 is a schematic structural diagram of a Nonce list maintained in a client device, according to an example embodiment;
FIG. 6 is a schematic structural diagram of an electronic device, according to an example embodiment;
FIG. 7 is a block diagram illustrating a blockchain-based transaction processing apparatus, according to an example embodiment; and
FIG. 8 is another block diagram illustrating a blockchain-based transaction processing apparatus, according to an example embodiment.

### DESCRIPTION OF EMBODIMENTS

A replay attack in the blockchain field refers to an attack behavior of publishing a repeated transaction, which causes the same transaction to be executed for a plurality of times, and causes a loss to a user.

For example, a classic "double spending" problem in a Bitcoin network is a typical replay attack. If a transfer transaction is intercepted by an unauthorized node after being approved by a signature of a user by using a private key, the unauthorized node can initiate a replay attack based on the intercepted transaction after the transaction is executed. The transaction is repeatedly published and executed in the blockchain. Consequently, the transfer transaction is executed for a plurality of times, causing a financial loss to the user.

In some shown implementations, usually a densely increasing Nonce value (a densely increasing integer) can be added to a transaction to cope with the replay attack risk to the transaction.

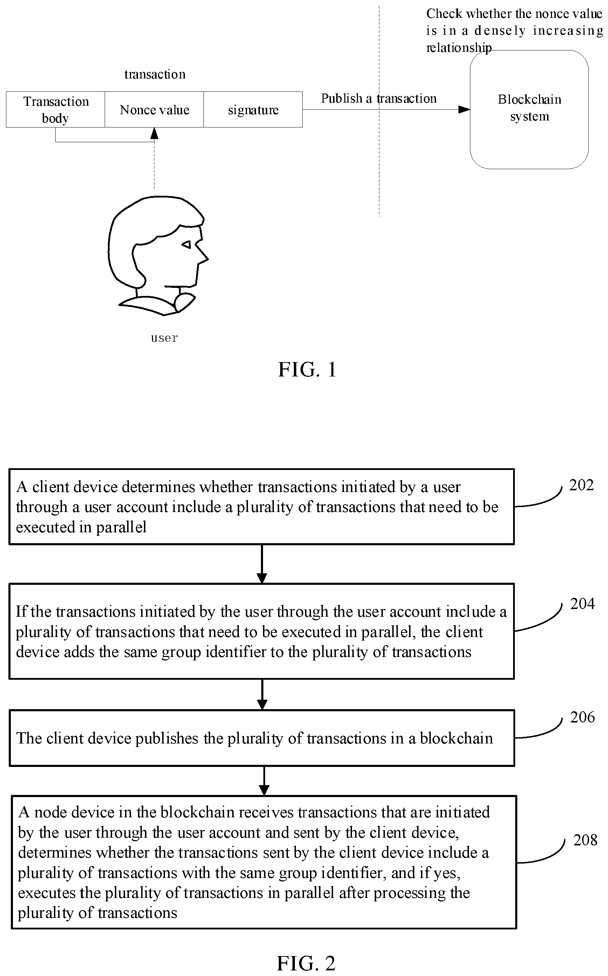

FIG. 1 is a schematic diagram illustrating performing replay attack detection for a transaction, according to the present specification.

As shown in FIG. 1, a Nonce value can be specified for each transaction initiated by a user through a personal user account on a client device, and a signature can be added to a transaction body and the specified Nonce value of the transaction by using a private key held by the user. The signature is an overall signature of [transaction body, Nonce value]. As such, it can be ensured that the Nonce value of the transaction cannot be tampered with.

After the signature is added, the client device can publish the transaction in a blockchain. After receiving the transaction, a node device in the blockchain needs to verify whether the signature of the transaction is valid, and further needs to detect whether the Nonce value of the transaction is in a densely increasing relationship with a Nonce value of the latest transaction that has been successfully processed. If the Nonce value of the transaction is in a densely increasing relationship with the Nonce value of the latest transaction that has been successfully processed, the transaction can be processed. Otherwise, the transaction can be considered as an invalid transaction

For example, assume that the user initiates a transaction with a Nonce value of 1 on the client device through the personal user account, namely, Account 1. After the transaction is successfully processed in the blockchain, when the user initiates a new transaction on the client device through Account 1, a Nonce value of the transaction needs to be specified as 2, so that the transaction can be considered as a valid transaction by the node device in the blockchain for processing.

Correspondingly, a blockchain system maintains a Nonce status of the user account of the user. Each time a transaction initiated through Account 1 is successfully processed, the blockchain system increases the Nonce value corresponding to the user account by 1. After receiving a transaction published by the client device, the node device in the blockchain compares a Nonce value of the transaction with a Nonce value in the maintained Nonce status to determine whether the Nonce value of the transaction is exactly increased by 1 from a Nonce value of the latest transaction that has been successfully processed. If yes, the transaction can be processed.

As such, the replay attack risk to a transaction can be alleviated to some extent. However, for a user account, a next transaction can be initiated only after a current transaction is processed. Therefore, there is a shortfall in a capability of executing transactions of an account in parallel, and this method cannot be applied to a high-concurrency scenario.

In view of this, in the present specification, based on the previous replay attack protection solution, a technical solution that can improve a capability of executing transactions of an account in parallel on a client device is provided.

In implementation, when receiving many transactions initiated by a user through a user account, the client device can determine whether the transactions initiated by the user include a plurality of transactions that need to be executed in parallel. For example, in some implementations, the client device can determine a plurality of transactions of the same transaction type as the plurality of transactions that need to be executed in parallel.

When determining that the transactions initiated by the user include a plurality of transactions that need to be executed in parallel, the client device can add the same group identifier to the plurality of transactions, and publish the transactions to which the group identifier is added in a blockchain. The same group identifier is added to the plurality of transactions to trigger a node device in the blockchain to execute the plurality of transactions in parallel after processing the plurality of transactions.

After receiving transactions sent by the client device, the node device in the blockchain can determine whether the transactions sent by the client device include a plurality of transactions with the same group identifier. If yes, the node device can execute the plurality of transactions in parallel after successfully processing the plurality of transactions.

In the previous embodiments, the client device adds the same group identifier to a plurality of transactions that need to be executed in parallel and are initiated by the user, so that the node device in the blockchain can execute the plurality of transactions with the same group identifier in parallel after processing the transaction initiated by the user. As such, the capability of executing transactions of an account in parallel on the client device can be improved.

The following describes the present specification by using specific embodiments and with reference to specific application scenarios.

FIG. 2 illustrates a blockchain-based transaction processing method, according to an embodiment of the present specification. The method includes the following steps.

Step 202: A client device determines whether transactions initiated by a user through a user account include a plurality of transactions that need to be executed in parallel.

Step 204: If the transactions initiated by the user through the user account include a plurality of transactions that need to be executed in parallel, the client device adds the same group identifier to the plurality of transactions.

Step 206: The client device publishes the plurality of transactions in a blockchain.

Step 208: A node device in the blockchain receives transactions that are initiated by the user through the user account and sent by the client device, determines whether the transactions sent by the client device include a plurality of transactions with the same group identifier, and if yes, executes the plurality of transactions in parallel after processing the plurality of transactions.

The blockchain described in the present specification can specifically include a private blockchain, a public blockchain, a consortium blockchain, etc. Implementations are not specifically limited in the present specification.

For example, in a scenario, the blockchain may be specifically a consortium blockchain that includes, as member devices, a server of a third-party payment platform, a domestic bank server, an overseas bank server, and several user node devices. An operator of the consortium blockchain can deploy online services such as cross-border transfer and asset transfer based on the consortium blockchain.

It is worthwhile to note that a transaction described in the present specification refers to a piece of data created by a user through a client device of the blockchain and needs to be eventually published in a distributed database of the blockchain.

Transactions in the blockchain are usually classified into a transaction in a narrow sense and a transaction in a broad sense. The transaction in a narrow sense refers to a value transfer published by a user in the blockchain. For example, in a conventional Bitcoin blockchain network, a transaction can be a transfer initiated by a user in the blockchain. The transaction in a broad sense refers to service data with a service intention published by a user in the blockchain. For example, the operator can build a consortium blockchain based on actual service needs, and deploy some other types of online services (for example, anti-counterfeiting services, house rental services, vehicle scheduling services, insurance claims services, credit services, and medical services) that are irrelevant to value transfer based on the consortium blockchain. In this type of consortium blockchain, a transaction can be a service message or a service request with a service intention published by a user in the consortium blockchain.

In the present specification, the client device can be specifically a multi-threaded client device. That is, the client device can simultaneously enable a plurality of threads, and each thread can run independently. As such, the user can simultaneously initiate a plurality of transactions through the personal user account and by invoking the plurality of threads of the client device.

When receiving the plurality of transactions initiated by the user through the user account, the client device can determine whether the transactions initiated by the user through the user account include a plurality of transactions that need to be executed in parallel.

In the present specification, the plurality of transactions that need to be executed in parallel can include any type of transactions provided that there is no strict transaction execution order between the transactions, and the transactions can be processed and executed in parallel.

For example, if execution of a transaction requires an execution result of another transaction as an input, the two transactions cannot be processed and executed in parallel. On the contrary, if there is no such data dependency between two transactions, the two transactions can be processed and executed in parallel.

In implementation, the plurality of transactions that need to be executed in parallel can be manually specified by the user in a process of initiating transactions through the user account.

For example, in some shown implementations, after initiating many transactions, the user can manually specify, based on needs through a user interface provided by the client device, the plurality of transactions that need to be executed in parallel.

In practice, the plurality of transactions that need to be executed in parallel can be dynamically confirmed by the client device based on a predetermined parallel processing rule.

Specific content of the parallel processing rules is not particularly limited in the present specification. In practice, a person skilled in the art can flexibly define the parallel processing rule based on actual parallel processing needs.

For example, in some shown implementations, the parallel processing rule can be a rule for "executing transactions of the same transaction type in parallel".

In this case, after receiving many transactions initiated by the user, the client device can further check specific transaction types of these transactions, and then determine a plurality of transactions of the same transaction type as transactions that need to be executed in parallel. For example, if transaction types supported by the blockchain include a transaction type used to create an account and a transaction type used to implement a transfer, the client device can determine the transaction type used to create an account and the transaction type used to implement a transfer in the many transactions initiated by the user, and then determine a plurality of transactions corresponding to the two transaction types as transactions that need to be executed in parallel.

Certainly, in practice, in addition to the rule for "executing transactions of the same transaction type in parallel", other types of parallel processing rules can be used. Implementations are not listed one by one in the present specification.

In the present specification, a transaction format supported in the blockchain can be extended to introduce a group identifier field. When determining that the transactions initiated by the user through the user account include a plurality of transactions that need to be executed in parallel, the client device can add the same group identifier to group identifier fields of the plurality of transactions for the plurality of transactions.

In the present specification, the same group identifier is added to the plurality of transactions to trigger the node device in the blockchain to execute the plurality of transactions in parallel after processing the plurality of transactions.

Correspondingly, after receiving the transactions that are sent by the client device and to which the group identifier is added, the node device in the blockchain can determine whether the transactions sent by the client device include a plurality of transactions with the same group identifier. If yes, it indicates that the client device requests to execute the plurality of transactions in parallel in the blockchain. In this case, the node device in the blockchain can execute the plurality of transactions with the same group identifier in parallel after a series of verifications and checks performed in a blockchain system prior to processing on the plurality of transactions succeed and the plurality of transactions are successfully processed.

In practice, the transactions initiated by the user through the user account may include a plurality of transaction groups with each including a plurality of transactions that need to be executed in parallel, and the plurality of transaction groups may be executed in a specific order. In this case, if the transactions initiated by the user through the user account include the plurality of transaction groups with each including a plurality of transactions that need to be executed in parallel, the client device can further determine the execution order of the plurality of transaction groups.

The execution order of the plurality of transaction groups can be manually defined by the user, or can be dynamically confirmed by the client device based on an actual service procedure. Implementations are not specifically limited in the present specification.

Further, after determining the execution order of the plurality of transaction groups, the client device needs to add the same group identifier to the plurality of transactions included in each of the plurality of transaction groups, and further needs to ensure that group identifiers added to transactions included in the plurality of transaction groups can indicate the execution order of the plurality of transaction groups.

The group identifiers are used to indicate the execution order of the plurality of transaction groups, which can be specifically implemented by adding group identifiers that are in a monotonically increasing relationship to the plurality of transaction groups.

For example, assume that the transactions initiated by the user through the user account include two transaction groups, namely, {A1, B1, C1} and {A2, B2, C2}, with each including transactions that need to be executed in parallel. In this case, the client device can add the same group identifier 1 to transactions A1, B1, and C1, and add the same group identifier 2 to transactions A2, B2, and C2, and indicate, by using a monotonically increasing relationship between the group identifiers, that the transaction group {A1, B1, C1} needs to be executed before the transaction group {A2, B2, C2}. That is, the execution order of the transaction groups is consistent with an ascending order of the added transaction identifiers.

Correspondingly, in this case, after receiving the transactions that are sent by the client device and to which the group identifier is added and determining that the transactions sent by the client device include a plurality of transaction groups with each including a plurality of transactions with the same group identifier, the node device in the blockchain can execute the plurality of transaction groups in an execution order indicated by group identifiers of the plurality of transaction groups.

For example, the transactions initiated by the user through the user account include two transaction groups, namely, {A1, B1, C1} and {A2, B2, C2}, with each including transactions that need to be executed in parallel, and the client device can add the same group identifier 1 for transactions A1, B1, and C1, and add the same group identifier 2 for transactions A2, B2, and C2. In this case, after the transactions A1, B1, C1, A2, B2, and C2 are all processed, the node device in the blockchain executes the transactions A1, B1, and C1 in the transaction group whose group identifier is 1 in parallel, and then executes the transactions A2, B2, and C2 in the transaction group whose group identifier is 2 in parallel.

In the previous solution, the group identifier field is introduced in the transaction format supported in the blockchain, and the client device adds the same group identifier to group identifier fields of a plurality of transactions that need to be executed in parallel for the plurality of transactions. As such, the node device in the blockchain can be triggered to execute the plurality of transactions with the same group identifier in parallel. As such, the capability of executing transactions of an account in parallel in the blockchain can be improved.

In practice, before being processed and executed by the node device in the blockchain, a transaction usually needs to go through a series of verification and check processes in the blockchain system. Replay attack detection for a transaction is usually an important part of the series of verification and check processes. Therefore, in the present specification, the previously described technical solution of adding the same group identifier to a plurality of transactions to trigger the node device in the blockchain to execute the plurality of transactions with the same group identifier in parallel can be combined with the replay attack detection for the transaction. As such, the capability of executing transactions of an account in parallel on the client device can be further improved while a replay attack on the transaction is alleviated.

In some shown implementations, a Nonce list set can be maintained in the blockchain. The Nonce list set can include Nonce lists corresponding to several user accounts. Each of the Nonce lists can include a plurality of Nonce records. Each Nonce record can include an auxiliary parameter and a Nonce value.

That is, in the present specification, the Nonce record can be specifically a composite structure that includes a plurality of fields including the Nonce value.

In implementation, the operator of the blockchain can allocate an available Nonce value to each user account in advance, set a corresponding auxiliary field for each Nonce value based on the allocated available Nonce value, and then construct a plurality of Nonce records based on each available Nonce value and the corresponding auxiliary field.

Then, a Nonce list can be constructed for the user account based on the plurality of generated Nonce records. Finally, the Nonce list set can be created based on the Nonce list constructed for each user account, and the Nonce list set can be published in the blockchain. Consensus processing can be performed by the node device in the blockchain, and after a consensus is reached, the Nonce list set can be stored in a distributed database of the blockchain for storage and maintenance.

It is worthwhile to note that specific parameter content of the auxiliary parameters is not particularly limited in the present specification. In practice, the auxiliary parameter can specifically include any form of parameter obtained by the operator of the blockchain through extension based on the available Nonce value of the user account and actual needs, or a combination of parameters.

That is, in practice, the quantity and type of parameters that can be included in the auxiliary parameter may not be fixed. Any parameter can be obtained as the auxiliary parameter through extension based on the Nonce value. Alternatively, a plurality of parameters can be obtained through extension based on the Nonce value, and are combined as the auxiliary parameter.

In the present specification, the previously described group identifier added by the client device to a transaction can be specifically used as the auxiliary parameter in the Nonce record in the Nonce list. A Nonce list corresponding to each user account in the Nonce list set can include a plurality of Nonce records that include the same group identifier. As such, when adding the same group identifier to a plurality of transactions initiated by the user through the user account, the client device can obtain Nonce records that include the same group identifier from the Nonce list.

In some shown implementations, in addition to the group identifier, the auxiliary parameter in the Nonce record in the Nonce list can include an index identifier (for example, an index number) of the Nonce record. The index identifier is specifically used to indicate a rank and a location of the Nonce record in the Nonce list.

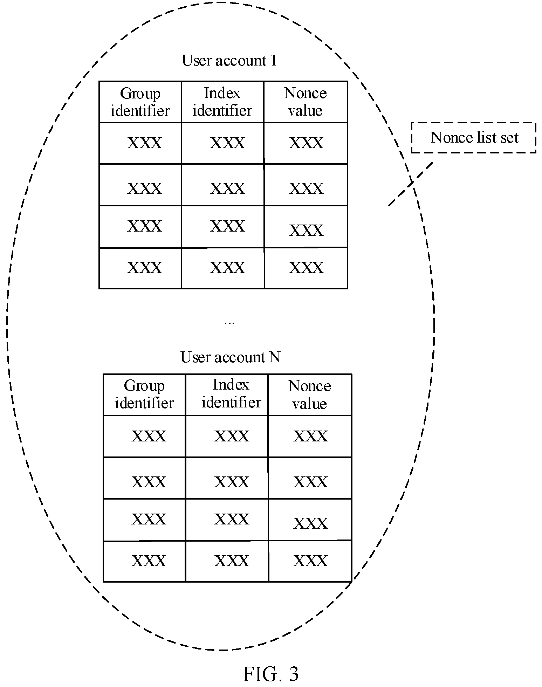

For example, referring to FIG. 3, the auxiliary parameter in the Nonce record in the Nonce list includes both the group identifier and the index identifier of the Nonce record. In this case, the Nonce record can be specifically a composite structure including fields such as the group ID (group identifier), the index (index identifier), and the value (Nonce value). In this case, the Nonce list set maintained in the blockchain can be represented in a form shown in FIG. 3.

Specific byte lengths of the Nonce record, the Nonce value and the auxiliary parameter in the Nonce record are not particularly limited in the present specification. In practice, the byte lengths can be flexibly set based on actual needs of the operator of the blockchain (for example, the operator can control specific value ranges of the Nonce value and the auxiliary parameter by using the occupied byte lengths).

For example, in some implementations, the Nonce record can be specifically a 16-byte composite structure. Four bytes represents the group ID (group identifier), four bytes represents the index (index identifier), and eight bytes represents the value (Nonce value).

A plurality of parameters are obtained through extension based on the Nonce value, and are combined as the auxiliary parameter, so that the Nonce record in the Nonce table can cover various value fields, to reduce the probability that the plurality of Nonce records in the Nonce list conflict with each other due to the same value.

For example, the probability that two 12-byte Nonce records that include the group ID (group identifier) and the value (Nonce value) are identical and conflict with each other is far lower than the probability that two 16-byte Nonce records that include the group ID (group identifier), the index (index identifier), and the value (Nonce value) are identical and conflict with each other.

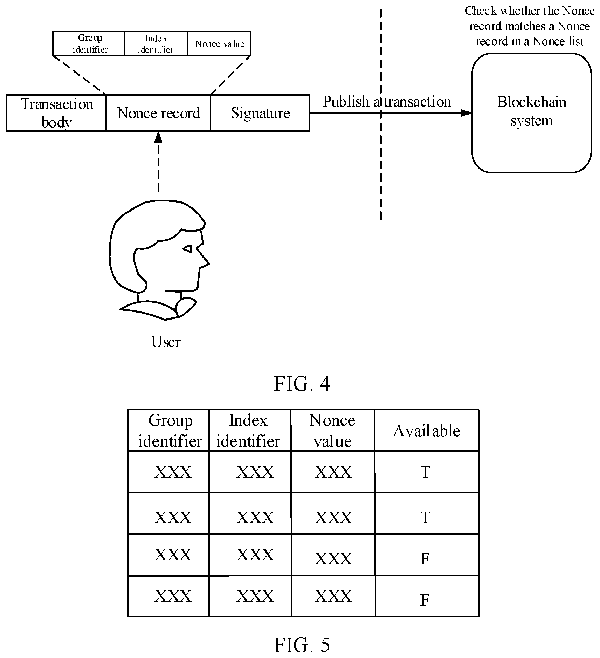

Referring to FIG.4, when the user initiates, on the client device through the personal user account and by invoking the plurality of threads enabled on the client device, a plurality of transactions that need to be executed in parallel, the client device can obtain available Nonce records that include the same group identifier for the plurality of transactions from the Nonce list that corresponds to the user account and is maintained in the blockchain (that is, add the same group identifier to the plurality of transactions).

The Nonce list includes a plurality of Nonce records, and therefore the plurality of threads enabled on the client device can obtain available Nonce records for initiated transactions from the Nonce list. As such, the user can simultaneously initiate a plurality of transactions through the client device through the personal user account. Therefore, in the present specification, the quantity of Nonce records in above Nonce list can be actually used to indicate a capability of executing transactions of the personal user account of the user in parallel. For example, if the Nonce list includes four Nonce records, the user can simultaneously initiate four transactions through the user account.

Based on this, in practice, the operator of the blockchain can flexibly specify the quantity of Nonce records included in the Nonce list based on performance of the client device. Alternatively, the client device can actively report performance of the client device to a blockchain system, and the operator of the blockchain can flexibly specify the quantity of Nonce records included in the Nonce list.

For example, if it is determined, based on the performance of the client device, that the client device can simultaneously enable four threads to initiate a transaction, four available Nonce records can be added to the Nonce list when the Nonce list is created for the user account logged in to the client device.

In some shown implementations, in an initialization phase, the client device can "download" the Nonce list maintained in the blockchain in advance for local maintenance.

For example, in implementation, when the client device is started for running, or when the client device is disconnected from the node device in the blockchain, and needs to be reconnected to the node device, an initialization operation is needed. In this case, when receiving an initialization instruction (for example, a start instruction or a reconnection instruction) for the client device that is triggered by the user, the client device can establish a connection to the node device in the blockchain in response to the initialization instruction, access the distributed database of the blockchain based on the connection, obtain the Nonce list maintained in the blockchain, and then locally store and maintain the obtained Nonce list.

In this case, when needing to obtain the available Nonce records that include the same group identifier for the plurality of transactions, the client device can directly obtain the available Nonce records from the locally maintained Nonce list.

In this way, no data exchange needs to be performed with the node device in the blockchain, and data is read from the Nonce list maintained in the blockchain to obtain the available Nonce record for the target transaction. As such, processing performance of the client device can be improved.

It is worthwhile to note that if the transactions initiated by the user through the user account include a plurality of transaction groups with each including a plurality of transactions that need to be executed in parallel, the same group identifier needs to be added to the transactions in each of the plurality of transaction groups, and it further needs to be ensured that different transaction groups are corresponding to different group identifiers. Therefore, in this case, the Nonce list needs to include a plurality of Nonce record groups indicating the same group identifier for transactions in the same transaction group and a different group identifier for a different transaction group. In other words, the transactions in the same transaction group have the same group identifier, and a transaction in a different transaction group has a different group identifier. As such, it is ensured that available Nonce records that include the same group identifier can be obtained for the transactions in each of the plurality of transaction groups, and group identifiers of the plurality of transaction groups indicate an execution order of the plurality of transaction groups.

In some shown implementations, for the Nonce list locally maintained on the client device, a mark indicating "available" can be added by default by the client device to the Nonce records in the Nonce list.

For example, referring to FIG. 5, the Nonce record is the 16-byte composite structure shown in FIG. 4, and a 1-byte available field can be obtained through extension for the Nonce record in the Nonce list. When a value of the available field is T, it indicates that the Nonce record is "available". When the value of the available field is F, it indicates that the Nonce record is "unavailable".

When the threads enabled on the client device obtain the available Nonce records for the plurality of transactions initiated by the user from the Nonce list maintained locally on the client device, a plurality of Nonce records that include the same group identifier can be randomly selected as the available Nonce records from all Nonce records that are marked as "available" in the Nonce list.

In addition, after the threads enabled on the client device obtain the available Nonce records for the plurality of transactions initiated by the user from the Nonce list locally maintained on the client device, marks included in the Nonce records can be modified and updated, and marks indicating "unavailable" can be added to the available Nonce records, to mark the available Nonce records as unavailable.

In the present specification, after obtaining the available Nonce records for the plurality of transactions that need to be executed in parallel and are initiated by the user, the client device can add the obtained available Nonce records to the plurality of transactions.

For example, referring back to FIG. 4, after obtaining the available Nonce record for the transaction, the client device can package a transaction body of the transaction and the available Nonce record, and then prompt the user to add an overall signature to the packaged [transaction body, Nonce record] based on a held private key. As such, it can be ensured that the Nonce record in the transaction cannot be tampered with.

Further, after the client device adds the obtained available Nonce records to the plurality of transactions, the client device can publish the plurality of transactions in the blockchain.

For example, the client device publishes the plurality of transactions to the node device accessed by the client device, or publishes the plurality of transactions in the blockchain through broadcasting. A specific way of publishing the plurality of transactions in the blockchain by the client device usually depends on a consensus mechanism used in the blockchain. Implementations are not particularly limited in the present specification.

When receiving the transaction published by the client device, the node device in the blockchain can first initiate consensus processing for the received transaction based on a consensus algorithm used in the blockchain.

The consensus algorithm used in the blockchain and a consensus processing process for the target transaction based on the consensus algorithm are not described in detail in the present specification for simplicity. A person skilled in the art can refer to description of related technologies when implementing the technical solutions described in the present specification.

When a consensus on the received transaction is reached, the node device in the blockchain can further initiate validity detection for the received transaction.

In the present specification, the validity detection for the transaction can include at least validity detection for the signature included in the transaction and replay attack detection for the transaction.

In implementation, the node device in the blockchain can first verify the signature of the received transaction based on a public key corresponding to the private key held by the user. If verification on the signature of the transaction fails, the transaction can be considered as an invalid transaction, and the node device can directly return, to the user through the client device, a prompt message indicating a transaction execution failure.

If verification on the signature of the transaction succeeds, the node device can further perform replay attack detection for the transaction based on the available Nonce record included in the target transaction and the Nonce list that corresponds to the user account of the user and is maintained in the blockchain.

Referring back to FIG. 4, the node device can match the Nonce record included in the transaction with each Nonce record in the Nonce list that corresponds to the user account and is maintained in the blockchain. If the Nonce record included in the transaction matches any target Nonce record in the Nonce list, it can be determined that the replay attack detection for the transaction succeeds. In this case, the node device can process the transaction.

In addition, after the transaction is processed, the node device can monotonically increase a Nonce value in the target Nonce record based on predetermined amplitude. The predetermined amplitude can be customized based on actual needs.

For example, the predetermined amplitude can still be 1, and the node device can increase the Nonce value in the matched target Nonce record in the Nonce list by 1 after the transaction is processed.

In this way, if the transaction is repeatedly published in the blockchain after being processed, no corresponding Nonce record can be matched for the repeatedly published transaction from the Nonce list because the Nonce value in the target Nonce record that matches the available Nonce record included in the transaction in the Nonce list has been updated. Therefore, the repeatedly published transaction will not be processed again. As such, a replay attack initiated by repeatedly publishing the transaction in the blockchain can be effectively alleviated.

In some shown implementations, after the transaction is processed, a notification message indicating that the transaction is processed can be returned to the client device. After publishing the transaction initiated by the user through the personal user account in the blockchain, the client device can determine whether the notification message indicating that the transaction is processed is received from the node device.

If the client device determines that the notification message indicating that the transaction is processed is received, the client device can monotonically increase, based on the predetermined amplitude, the Nonce value in the available Nonce record obtained for the initiated transaction from the Nonce list locally maintained on the client device. For example, the client device increases the Nonce value in the available Nonce record by 1 to maintain content synchronization with the Nonce list maintained in the blockchain.

In addition, the available Nonce record has previously been marked as "unavailable". Therefore, after monotonically increasing the Nonce value in the available Nonce record based on the predetermined amplitude, the client device can set the value of the available field in the available Nonce record to "T".

In the present specification, after all transactions that are initiated by the user and sent by the client device are processed, the node device in the blockchain can further determine whether there are a plurality of transactions with the same group identifier in the processed transactions sent by the client device.

If there are a plurality of transactions with the same group identifier in the processed transactions, the node device in the blockchain can execute the plurality of transactions in parallel, and store the plurality of transactions and execution results of the plurality of transactions in the distributed database of the blockchain after executing the plurality of transactions.

In the previous solution, the technical solution of adding the same group identifier to a plurality of transactions to trigger the node device in the blockchain to execute the plurality of transactions with the same group identifier in parallel is combined with the replay attack detection for the transaction. As such, the capability of executing transactions of an account in parallel on the client device can be further improved while a replay attack on the transaction is alleviated.

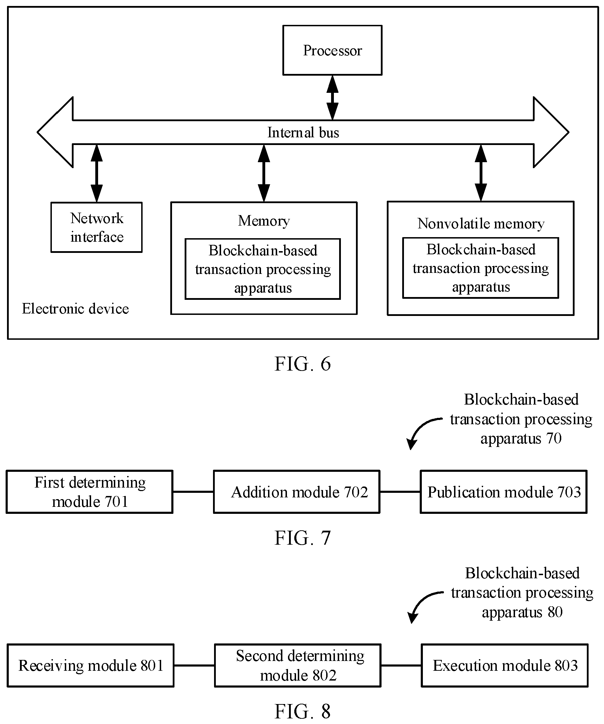

Corresponding to the previous method embodiments, the present specification further provides embodiments of a blockchain-based transaction processing apparatus. The embodiments of the blockchain-based transaction processing apparatus in the present specification can be applied to an electronic device. The apparatus embodiments can be implemented by software, or can be implemented by hardware or a combination of software and hardware. Software implementation is used as an example. As a logical apparatus, the apparatus is formed by reading a corresponding computer program instruction from a nonvolatile memory by a processor of the electronic device in which the apparatus is located and running the instruction in a memory. In terms of hardware, FIG. 6 is a diagram illustrating a hardware structure of the electronic device in which the blockchain-based transaction processing apparatus is located. In addition to a processor, a memory, a network interface, and a nonvolatile memory shown in FIG. 6, the electronic device in which the apparatus is located in some embodiments usually can include other hardware based on an actual function of the electronic device. Details are omitted here for simplicity.

FIG. 7 is a block diagram illustrating a blockchain-based transaction processing apparatus, according to an example embodiment of the present specification.

Referring to FIG. 7, the blockchain-based transaction processing apparatus 70 can be applied to the electronic device shown in FIG. 6, and includes a first determining module 701, an addition module 702, and a publication module 703.

The first determining module 701 is configured to determine whether transactions initiated by a user through a user account include a plurality of transactions that need to be executed in parallel.

The addition module 702 is configured to: if the transactions initiated by the user through the user account include a plurality of transactions that need to be executed in parallel, add the same group identifier to the plurality of transactions.

The publication module 703 is configured to publish the plurality of transactions in a blockchain, so that a node device in the blockchain executes the plurality of transactions with the same group identifier in parallel after processing the transaction published by the client device.

In some embodiments, the plurality of transactions that need to be executed in parallel include a plurality of transactions of the same transaction type.

In some embodiments, the addition module 702 is further configured to: if the transactions initiated by the user through the user account include a plurality of transaction groups with each including a plurality of transactions that need to be executed in parallel, determine an execution order of the plurality of transaction groups; and add grouping identifiers that indicate the execution order of the plurality of transaction groups to the plurality of transaction groups.

In some embodiments, a Nonce list corresponding to the user account is maintained in the blockchain, the Nonce list includes a plurality of Nonce records, and the Nonce record includes a group identifier and a Nonce value; and the addition module 702 is configured to: obtain available Nonce records that include the same group identifier for the plurality of transactions from the Nonce list, and respectively add the obtained available Nonce records to the plurality of transactions.

In some embodiments, the addition module 702 is further configured to: before obtaining the available Nonce records that include the same group identifier for the plurality of transactions from the Nonce list, in response to an initialization instruction for the client device, obtain the Nonce list maintained in the blockchain, and locally maintain the obtained Nonce list on the client device; and obtain the available Nonce records that include the same group identifier for the plurality of transactions from the Nonce list locally maintained on the client device.

In some embodiments, the Nonce records in the Nonce list locally maintained on the client device are marked as available by default; and the addition module 702 is further configured to: mark the available Nonce records as unavailable in the Nonce list after obtaining the available Nonce records for the plurality of transactions from the Nonce list locally maintained on the client device.

In some embodiments, the addition module 702 is further configured to: determine whether a notification message indicating that the transaction is processed is received from the node device; and if yes, monotonically increase a Nonce value in the available Nonce record based on predetermined amplitude, and re-mark the available Nonce record as available in the Nonce list after monotonically increasing the Nonce value.

In some embodiments, the publication module 703 is further configured to: publish the plurality of transactions in the blockchain, so that the node device in the blockchain matches the available Nonce record in the transaction published by the client device with the Nonce record in the Nonce list, and when the available Nonce record matches any target Nonce record in the Nonce list, processes the transaction, and executes the plurality of transactions with the same group identifier in processed transactions in parallel.

In some embodiments, the client device is a multi-threaded client device, and the quantity of Nonce records in the Nonce list indicates a capability of executing transactions of the user account in parallel.

In some embodiments, the Nonce record further includes an index identifier of the Nonce record.

FIG. 8 is another block diagram illustrating a blockchain-based transaction processing apparatus, according to an example embodiment of the present specification.

Referring to FIG. 8, the blockchain-based transaction processing apparatus 80 can also be applied to the electronic device shown in FIG. 6, and includes a receiving module 801, a second determining module 802, and an execution module 803.

The receiving module 801 is configured to receive transactions that are initiated by a user through a user account and sent by a client device. A group identifier is added to the transaction by the client device.

The second determining module 802 is configured to determine whether the transactions sent by the client device include a plurality of transactions with the same group identifier. The same group identifier is added by the client device when determining that the plurality of transactions need to be executed in parallel.

The execution module 803 is configured to: if yes, execute the plurality of transactions in parallel after the plurality of transactions are processed.

In some embodiments, the transactions sent by the client device include a plurality of transaction groups with each including a plurality of transactions with the same group identifier, and group identifiers added by the client device to the plurality of transaction groups indicate an execution order of the plurality of transaction groups; and the execution module 803 is further configured to: if the transactions sent by the client device include the plurality of transaction groups with each including a plurality of transactions with the same group identifier, execute the plurality of transaction groups in the execution order indicated by the group identifiers of the plurality of transaction groups.

In some embodiments, a Nonce list set is maintained in the blockchain, the Nonce list set includes Nonce lists corresponding to several user accounts, the Nonce list includes a plurality of Nonce records, the Nonce record includes a group identifier and a Nonce value, and the group identifier added to the transaction sent by the client device is included in an available Nonce record obtained by the client device from a Nonce list corresponding to the user account; and the execution module 803 is further configured to: match the available Nonce record added to the transaction sent by the client device with a Nonce record in the Nonce list that corresponds to the user account and is maintained in the blockchain; and process the transaction if the available Nonce record matches any target Nonce record in the Nonce list.

In some embodiments, the execution module 803 is further configured to: if the available Nonce record matches the any target Nonce record in the Nonce list, monotonically increase a Nonce value in the target Nonce record based on predetermined amplitude; and return a notification message indicating that the transaction is processed to the client device.

In some embodiments, the Nonce record further includes an index identifier of the Nonce record.

For specific implementation processes of functions of the modules in the apparatus, references can be made to the implementation processes of the corresponding steps in the method. Details are omitted here for simplicity.

The apparatus embodiments basically correspond to the method embodiments. Therefore, for related parts, references can be made to partial description in the method embodiments. The previously described apparatus embodiments are merely examples. The modules described as separate parts can be or do not have to be physically separate, and parts displayed as modules can be or do not have to be physical modules, can be located in one place, or can be distributed on a plurality of network modules. Some or all of these modules can be selected based on actual needs to achieve the objective of the technical solutions of the present specification. A person of ordinary skill in the art can understand and implement the present specification without creative efforts.

The system, apparatus, or module illustrated in the previously described embodiments can be specifically implemented by a computer chip or an entity, or can be implemented by a product having a certain function. A typical implementation device is a computer. Specific forms of the computer can include a personal computer, a laptop computer, a cellular phone, a camera phone, a smartphone, a personal digital assistant, a media player, a navigation device, an e-mail transceiver, a game console, a tablet computer, a wearable device, or any combination of several of these devices.

Corresponding to the previously described method embodiments, the present specification further provides embodiments of an electronic device. The electronic device includes a processor and a memory, configured to store a machine-executable instruction. The processor and the memory are usually connected to each other through an internal bus. In other possible implementations, the device can further include an external interface to enable the device to communicate with other devices or parts.

In some embodiments, by reading and executing the machine-executable instruction that is stored in the memory and corresponds to the blockchain-based transaction processing control logic, the processor is promoted to perform the following operations: determining whether transactions initiated by a user through a user account include a plurality of transactions that need to be executed in parallel; if the transactions initiated by the user through the user account include a plurality of transactions that need to be executed in parallel, adding the same group identifier to the plurality of transactions; and publishing the plurality of transactions in a blockchain, so that a node device in the blockchain executes the plurality of transactions with the same group identifier in parallel after processing the transaction published by the client device.

In some embodiments, by reading and executing the machine-executable instruction that is stored in the memory and corresponds to the blockchain-based transaction processing control logic, the processor is promoted to perform the following operations: if the transactions initiated by the user through the user account include a plurality of transaction groups with each including a plurality of transactions that need to be executed in parallel, determining an execution order of the plurality of transaction groups; and adding grouping identifiers that indicate the execution order of the plurality of transaction groups to the plurality of transaction groups.

In some embodiments, a Nonce list corresponding to the user account is maintained in the blockchain, the Nonce list includes a plurality of Nonce records, and the Nonce record includes a group identifier and a Nonce value; and by reading and executing the machine-executable instruction that is stored in the memory and corresponds to the blockchain-based transaction processing control logic, the processor is promoted to perform the following operations: obtaining available Nonce records that include the same group identifier for the plurality of transactions from the Nonce list, and respectively adding the obtained available Nonce records to the plurality of transactions.

In some embodiments, by reading and executing the machine-executable instruction that is stored in the memory and corresponds to the blockchain-based transaction processing control logic, the processor is promoted to perform the following operations: before obtaining the available Nonce records that include the same group identifier for the plurality of transactions from the Nonce list, in response to an initialization instruction for the client device, obtaining the Nonce list maintained in the blockchain, and locally maintaining the obtained Nonce list on the client device; and obtaining the available Nonce records that include the same group identifier for the plurality of transactions from the Nonce list locally maintained on the client device.

In some embodiments, the Nonce records in the Nonce list locally maintained on the client device are marked as available by default; and by reading and executing the machine-executable instruction that is stored in the memory and corresponds to the blockchain-based transaction processing control logic, the processor is promoted to perform the following operations: marking the available Nonce records as unavailable in the Nonce list after obtaining the available Nonce records for the plurality of transactions from the Nonce list locally maintained on the client device.

In some embodiments, by reading and executing the machine-executable instruction that is stored in the memory and corresponds to the blockchain-based transaction processing control logic, the processor is promoted to perform the following operations: determining whether a notification message indicating that the transaction is processed is received from the node device; and if yes, monotonically increasing a Nonce value in the available Nonce record based on predetermined amplitude, and re-marking the available Nonce record as available in the Nonce list after monotonically increasing the Nonce value.

In some embodiments, by reading and executing the machine-executable instruction that is stored in the memory and corresponds to the blockchain-based transaction processing control logic, the processor is promoted to perform the following operations: publishing the plurality of transactions in the blockchain, so that the node device in the blockchain matches the available Nonce record in the transaction published by the client device with the Nonce record in the Nonce list, and when the available Nonce record matches any target Nonce record in the Nonce list, processes the transaction, and executes the plurality of transactions with the same group identifier in processed transactions in parallel.

Corresponding to the method embodiments, the present specification further provides embodiments of an electronic device. The electronic device includes a processor and a memory, configured to store a machine-executable instruction. The processor and the memory are usually connected to each other through an internal bus. In other possible implementations, the device can further include an external interface to enable the device to communicate with other devices or parts.

In some embodiments, by reading and executing the machine-executable instruction that is stored in the memory and corresponds to blockchain-based transaction processing control logic, the processor is promoted to perform the following operations: receiving transactions that are initiated by a user through a user account and sent by a client device, where a group identifier is added to the transaction by the client device; determining whether the transactions sent by the client device include a plurality of transactions with the same group identifier, where the same group identifier is added by the client device when determining that the plurality of transactions need to be executed in parallel; and if yes, executing the plurality of transactions in parallel after the plurality of transactions are processed.

In some embodiments, the transactions sent by the client device include a plurality of transaction groups with each including a plurality of transactions with the same group identifier, and group identifiers added by the client device to the plurality of transaction groups indicate an execution order of the plurality of transaction groups; and by reading and executing the machine-executable instruction that is stored in the memory and corresponds to the blockchain-based transaction processing control logic, the processor is promoted to perform the following operations: if the transactions sent by the client device include the plurality of transaction groups with each including a plurality of transactions with the same group identifier, executing the plurality of transaction groups in the execution order indicated by the group identifiers of the plurality of transaction groups.

In some embodiments, a Nonce list set is maintained in the blockchain, the Nonce list set includes Nonce lists corresponding to several user accounts, the Nonce list includes a plurality of Nonce records, the Nonce record includes a group identifier and a Nonce value, and the group identifier added to the transaction sent by the client device is included in an available Nonce record obtained by the client device from a Nonce list corresponding to the user account; and by reading and executing the machine-executable instruction that is stored in the memory and corresponds to the blockchain-based transaction processing control logic, the processor is promoted to perform the following operations: matching the available Nonce record added to the transaction sent by the client device with a Nonce record in the Nonce list that corresponds to the user account and is maintained in the blockchain; and processing the transaction if the available Nonce record matches any target Nonce record in the Nonce list.

In some embodiments, by reading and executing the machine-executable instruction that is stored in the memory and corresponds to the blockchain-based transaction processing control logic, the processor is promoted to perform the following operations: if the available Nonce record matches the any target Nonce record in the Nonce list, monotonically increasing a Nonce value in the target Nonce record based on predetermined amplitude; and returning a notification message indicating that the transaction is processed to the client device.

A person skilled in the art can easily figure out another implementation solution of the present specification after considering the specification and practicing the present invention disclosed here. The present specification is intended to cover any variations, uses, or adaptive changes of the present specification. These variations, uses, or adaptive changes follow general principles of the present specification, and include common knowledge or a commonly used technical means that are not disclosed in the technical field of the present specification. The present specification and the embodiments are merely considered as examples, and the actual scope and spirit of the present specification are pointed out by the following claims.

It should be understood that the present specification is not limited to the precise structures that have been described above and shown in the accompanying drawings, and various modifications and changes can be made without departing from the scope of the present specification. The scope of the present specification is limited only by the appended claims.

The previous descriptions are merely preferred embodiments of the present specification, and are not intended to limit the present specification. The scope of protection is defined by the appended claims.

## Claims

1. A blockchain-based transaction processing method, applied to a client device, wherein the method comprises:
determining (202) whether transactions initiated by a user through a user account comprise a plurality of transactions that need to be executed in parallel, wherein a Nonce list corresponding to the user account is maintained in a blockchain, the Nonce list comprises a plurality of Nonce records, and each Nonce record comprises a group identifier and a Nonce value;
if the transactions initiated by the user through the user account comprise a plurality of transaction groups with each comprising a plurality of transactions that need to be executed in parallel, determining an execution order of the plurality of transaction groups, and adding (204) group identifiers that indicate the execution order of the plurality of transaction groups to the plurality of transaction groups, including:
obtaining available Nonce records that comprise a same group identifier for the plurality of transactions from the Nonce list, and respectively adding the obtained available Nonce records to the plurality of transactions; and
publishing (206) the plurality of transactions in the blockchain, so that a node device in the blockchain executes (208) the plurality of transactions with the same group identifier in parallel after processing the plurality of transactions published by the client device, including:
publishing the plurality of transactions in the blockchain, so that the node device in the blockchain matches the available Nonce record in the transaction published by the client device with the Nonce record in the Nonce list, and when the available Nonce record matches any target Nonce record in the Nonce list, processes the transaction, and executes the plurality of transactions with the same group identifier in processed transactions in parallel.

2. The method according to claim 1, wherein the plurality of transactions that need to be executed in parallel comprise a plurality of transactions of the same transaction type.

3. The method according to claim 1, wherein before the obtaining available Nonce records that comprise the same group identifier for the plurality of transactions from the Nonce list, the method further comprises:
in response to an initialization instruction for the client device, obtaining the Nonce list maintained in the blockchain, and locally maintaining the obtained Nonce list on the client device; and
the obtaining available Nonce records that comprise the same group identifier for the plurality of transactions from the Nonce list comprises:
obtaining the available Nonce records that comprise the same group identifier for the plurality of transactions from the Nonce list locally maintained on the client device.

4. The method according to claim 3, wherein the Nonce records in the Nonce list locally maintained on the client device are marked as available by default; and the method further comprises:
marking the available Nonce records as unavailable in the Nonce list after obtaining the available Nonce records for the plurality of transactions from the Nonce list locally maintained on the client device.

5. The method according to claim 4, further comprising:
determining whether a notification message indicating that the transaction is processed is received from the node device; and
if yes, monotonically increasing a Nonce value in the available Nonce record based on predetermined amplitude, and re-marking the available Nonce record as available in the Nonce list after monotonically increasing the Nonce value.

6. The method according to claim 1, wherein the client device is a multi-threaded client device, and the quantity of Nonce records in the Nonce list indicates a capability of executing transactions of the user account in parallel.

7. The method according to claim 6, wherein the Nonce record further comprises an index identifier of the Nonce record.

8. A blockchain-based transaction processing method, applied to a node device in a blockchain, wherein the method comprises:
receiving transactions that are initiated by a user through a user account and sent by a client device, wherein the transactions comprise a plurality of transaction groups with each comprising a plurality of transactions with a same group identifier, wherein group identifiers added by the client device to the plurality of transaction groups indicate an execution order of the plurality of transaction groups, wherein a Nonce list set is maintained in the blockchain, the Nonce list set comprises Nonce lists corresponding to several user accounts, the Nonce list comprises a plurality of Nonce records, each Nonce record comprises a group identifier and a Nonce value, and the group identifier added to the transaction sent by the client device is comprised in an available Nonce record obtained by the client device from a Nonce list corresponding to the user account;
determining whether the transactions sent by the client device comprise a plurality of transactions with the same group identifier, wherein the same group identifier is added by the client device when determining that the plurality of transactions need to be executed in parallel;
if yes, executing the plurality of transaction groups in the execution order indicated by the group identifiers of the plurality of transaction groups, wherein the plurality of transactions with the same group identifier are executed in parallel after the plurality of transactions are processed;
matching the available Nonce record added to the transaction sent by the client device with a Nonce record in the Nonce list that corresponds to the user account and is maintained in the blockchain; and
processing the transaction if the available Nonce record matches any target Nonce record in the Nonce list.

9. The method according to claim 8, further comprising:
if the available Nonce record matches the any target Nonce record in the Nonce list, monotonically increasing a Nonce value in the target Nonce record based on predetermined amplitude; and
returning a notification message indicating that the transaction is processed to the client device, wherein preferably the Nonce record further comprises an index identifier of the Nonce record.

10. An electronic device, comprising:
a processor; and
a memory, configured to store a machine-executable instruction, wherein
by reading and executing the machine-executable instruction that is stored in the memory and corresponds to blockchain-based transaction processing control logic, the processor is configured to perform a method according to any one of the preceding claims.

## Patentansprüche

1. Blockchain-basiertes Transaktionsverarbeitungsverfahren, das auf eine Client-Vorrichtung angewendet wird, wobei das Verfahren umfasst:
Bestimmen (202), ob Transaktionen, die von einem Benutzer über ein Benutzerkonto initiiert werden, eine Mehrzahl von Transaktionen umfassen, die parallel ausgeführt werden müssen, wobei eine Nonce-Liste, die dem Benutzerkonto entspricht, in einer Blockchain geführt wird, wobei die Nonce-Liste eine Mehrzahl von Nonce-Datensätzen umfasst und jeder Nonce-Datensatz eine Gruppenkennung und einen Nonce-Wert umfasst;
wenn die Transaktionen, die von dem Benutzer über das Benutzerkonto initiiert werden, eine Mehrzahl von Transaktionsgruppen umfassen, wobei jede eine Mehrzahl von Transaktionen umfasst, die parallel ausgeführt werden müssen, Bestimmen einer Ausführungsreihenfolge der Mehrzahl von Transaktionsgruppen und Hinzufügen (204) von Gruppenkennungen, die die Ausführungsreihenfolge der Mehrzahl von Transaktionsgruppen angeben, zu der Mehrzahl von Transaktionsgruppen, aufweisend:
Erhalten verfügbarer Nonce-Datensätze, die eine gleiche Gruppenkennung für die Mehrzahl von Transaktionen umfassen, aus der Nonce-Liste und jeweils Hinzufügen der erhaltenen verfügbaren Nonce-Datensätze zu der Mehrzahl von Transaktionen; und Veröffentlichen (206) der Mehrzahl von Transaktionen in der Blockchain, so dass eine Knotenvorrichtung in der Blockchain die Mehrzahl von Transaktionen mit der gleichen Gruppenkennung parallel ausführt (208), nachdem die Mehrzahl von Transaktionen, die von der Client-Vorrichtung veröffentlicht wurden, verarbeitet wurden, aufweisend:
Veröffentlichen der Mehrzahl von Transaktionen in der Blockchain, so dass die Knotenvorrichtung in der Blockchain den verfügbaren Nonce-Datensatz in der Transaktion, die von der Client-Vorrichtung veröffentlicht wurde, mit dem Nonce-Datensatz in der Nonce-Liste abgleicht, und wenn der verfügbare Nonce-Datensatz mit einem Ziel-Nonce-Datensatz in der Nonce-Liste übereinstimmt, Verarbeiten der Transaktion und Ausführen der Mehrzahl von Transaktionen mit der gleichen Gruppenkennung in verarbeiteten Transaktionen parallel.

2. Verfahren nach Anspruch 1, wobei die Mehrzahl von Transaktionen, die parallel ausgeführt werden müssen, eine Mehrzahl von Transaktionen des gleichen Transaktionstyps umfasst.

3. Verfahren nach Anspruch 1, wobei das Verfahren vor dem Erhalten verfügbarer Nonce-Datensätze, die die gleiche Gruppenkennung für die Mehrzahl von Transaktionen umfassen, aus der Nonce-Liste ferner umfasst:
als Reaktion auf eine Initialisierungsanweisung für die Client-Vorrichtung, Erhalten der in der Blockchain geführten Nonce-Liste und lokales Führen der erhaltenen Nonce-Liste auf der Client-Vorrichtung; und
das Erhalten verfügbarer Nonce-Datensätze, die die gleiche Gruppenkennung für die Mehrzahl von Transaktionen umfassen, aus der Nonce-Liste umfasst:
Erhalten der verfügbaren Nonce-Datensätze, die die gleiche Gruppenkennung für die Mehrzahl von Transaktionen umfassen, aus der auf der Client-Vorrichtung lokal geführten Nonce-Liste.

4. Verfahren nach Anspruch 3, wobei die Nonce-Datensätze in der auf der Client-Vorrichtung lokal geführten Nonce-Liste standardmäßig als verfügbar markiert werden; und
das Verfahren ferner umfasst:
Markieren der verfügbaren Nonce-Datensätze als nicht verfügbar in der Nonce-Liste nach dem Erhalten der verfügbaren Nonce-Datensätze für die Mehrzahl von Transaktionen aus der auf der Client-Vorrichtung lokal geführten Nonce-Liste.

5. Verfahren nach Anspruch 4, ferner umfassend:
Bestimmen, ob eine Benachrichtigungsnachricht, die angibt, dass die Transaktion verarbeitet wird, von der Knotenvorrichtung empfangen wird; und
wenn ja, fortlaufendes Erhöhen eines Nonce-Werts in dem verfügbaren Nonce-Datensatz basierend auf einer vorbestimmten Amplitude und erneutes Markieren des verfügbaren Nonce-Datensatzes als verfügbar in der Nonce-Liste nach dem fortlaufenden Erhöhen des Nonce-Werts.

6. Verfahren nach Anspruch 1, wobei die Client-Vorrichtung eine Multi-Thread-Client-Vorrichtung ist und die Menge von Nonce-Datensätzen in der Nonce-Liste eine Fähigkeit zum parallelen Ausführen von Transaktionen des Benutzerkontos angibt.

7. Verfahren nach Anspruch 6, wobei der Nonce-Datensatz ferner eine Indexkennung des Nonce-Datensatzes umfasst.

8. Blockchain-basiertes Transaktionsverarbeitungsverfahren, das auf eine Knotenvorrichtung in einer Blockchain angewendet wird, wobei das Verfahren umfasst:
Empfangen von Transaktionen, die von einem Benutzer über ein Benutzerkonto initiiert und von einer Client-Vorrichtung gesendet werden, wobei die Transaktionen eine Mehrzahl von Transaktionsgruppen umfassen, wobei jede eine Mehrzahl von Transaktionen mit einer gleichen Gruppenkennung umfasst, wobei Gruppenkennungen, die von der Client-Vorrichtung zu der Mehrzahl von Transaktionsgruppen hinzugefügt werden, eine Ausführungsreihenfolge der Mehrzahl von Transaktionsgruppen angeben, wobei ein Nonce-Listensatz in der Blockchain geführt wird, wobei der Nonce-Listensatz Nonce-Listen umfasst, die mehreren Benutzerkonten entsprechen, wobei die Nonce-Liste eine Mehrzahl von Nonce-Datensätzen umfasst, wobei jeder Nonce-Datensatz eine Gruppenkennung und einen Nonce-Wert umfasst und die Gruppenkennung, die zu der von der Client-Vorrichtung gesendeten Transaktion hinzugefügt wird, in einem verfügbaren Nonce-Datensatz enthalten ist, der von der Client-Vorrichtung aus einer dem Benutzerkonto entsprechenden Nonce-Liste erhalten wird;
Bestimmen, ob die von der Client-Vorrichtung gesendeten Transaktionen eine Mehrzahl von Transaktionen mit der gleichen Gruppenkennung umfassen, wobei die gleiche Gruppenkennung von der Client-Vorrichtung hinzugefügt wird, wenn bestimmt wird, dass die Mehrzahl von Transaktionen parallel ausgeführt werden müssen;
wenn ja, Ausführen der Mehrzahl von Transaktionsgruppen in der Ausführungsreihenfolge, die von den Gruppenkennungen der Mehrzahl von Transaktionsgruppen angegeben wird, wobei die Mehrzahl von Transaktionen mit der gleichen Gruppenkennung parallel ausgeführt wird, nachdem die Mehrzahl von Transaktionen verarbeitet wurde;
Abgleichen des verfügbaren Nonce-Datensatzes, der zu der von der Client-Vorrichtung gesendeten Transaktion hinzugefügt wird, mit einem Nonce-Datensatz in der Nonce-Liste, der dem Benutzerkonto entspricht und in der Blockchain geführt wird; und
Verarbeiten der Transaktion, wenn der verfügbare Nonce-Datensatz mit einem Ziel-Nonce-Datensatz in der Nonce-Liste übereinstimmt.

9. Verfahren nach Anspruch 8, ferner umfassend:
wenn der verfügbare Nonce-Datensatz mit einem Ziel-Nonce-Datensatz in der Nonce-Liste übereinstimmt, fortlaufendes Erhöhen eines Nonce-Werts in dem Ziel-Nonce-Datensatz basierend auf einer vorbestimmten Amplitude; und
Zurücksenden einer Benachrichtigungsnachricht, die angibt, dass die Transaktion verarbeitet wird, an die Client-Vorrichtung, wobei der Nonce-Datensatz vorzugsweise ferner eine Indexkennung des Nonce-Datensatzes umfasst.

10. Elektronische Vorrichtung, umfassend:
einen Prozessor; und
einen Speicher, der eingerichtet ist, einen maschinenausführbaren Befehl zu speichern, wobei durch Lesen und Ausführen des maschinenausführbaren Befehls, der in dem Speicher gespeichert ist und Blockchain-basierter Transaktionsverarbeitungssteuerlogik entspricht, der Prozessor eingerichtet ist, ein Verfahren nach einem der vorhergehenden Ansprüche durchzuführen.

## Revendications

1. Procédé de traitement de transactions basé sur une chaîne de blocs, appliqué à un dispositif client, dans lequel le procédé comprend :
la détermination (202) si des transactions initiées par un utilisateur par l'intermédiaire d'un compte utilisateur comprennent une pluralité de transactions qui doivent être exécutées en parallèle, dans lequel une liste de Nonce correspondant au compte utilisateur est maintenue dans une chaîne de blocs, la liste de Nonce comprend une pluralité d'enregistrements de Nonce, et chaque enregistrement de Nonce comprend un identifiant de groupe et une valeur de Nonce ;
si les transactions initiées par l'utilisateur par l'intermédiaire du compte utilisateur comprennent une pluralité de groupes de transactions comprenant chacun une pluralité de transactions qui doivent être exécutées en parallèle, la détermination d'un ordre d'exécution de la pluralité de groupes de transactions, et l'ajout (204) d'identifiants de groupe qui indiquent l'ordre d'exécution de la pluralité de groupes de transactions à la pluralité de groupes de transactions, incluant :
l'obtention d'enregistrements de Nonce disponibles qui comprennent un même identifiant de groupe pour la pluralité de transactions à partir de la liste de Nonce, et l'ajout respectif des enregistrements de Nonce disponibles obtenus à la pluralité de transactions ; et
la publication (206) de la pluralité de transactions dans la chaîne de blocs, de sorte qu'un dispositif nœud dans la chaîne de blocs exécute (208) la pluralité de transactions avec le même identifiant de groupe en parallèle après le traitement de la pluralité de transactions publiées par le dispositif client, incluant :
la publication de la pluralité de transactions dans la chaîne de blocs, de sorte que le dispositif nœud dans la chaîne de blocs fasse correspondre l'enregistrement de Nonce disponible dans la transaction publiée par le dispositif client avec l'enregistrement de Nonce dans la liste de Nonce, et lorsque l'enregistrement de Nonce disponible correspond à un quelconque enregistrement de Nonce cible dans la liste de Nonce, traite la transaction, et exécute la pluralité de transactions avec le même identifiant de groupe dans des transactions traitées en parallèle.

2. Procédé selon la revendication 1, dans lequel la pluralité de transactions qui doivent être exécutées en parallèle comprennent une pluralité de transactions du même type de transaction.

3. Procédé selon la revendication 1, dans lequel avant l'obtention d'enregistrements de Nonce disponibles qui comprennent le même identifiant de groupe pour la pluralité de transactions à partir de la liste de Nonce, le procédé comprend en outre :
en réponse à une instruction d'initialisation pour le dispositif client, l'obtention de la liste de Nonce maintenue dans la chaîne de blocs, et le maintien local de la liste de Nonce obtenue sur le dispositif client ; et
l'obtention d'enregistrements de Nonce disponibles qui comprennent le même identifiant de groupe pour la pluralité de transactions à partir de la liste de Nonce comprend :
l'obtention des enregistrements de Nonce disponibles qui comprennent le même identifiant de groupe pour la pluralité de transactions à partir de la liste de Nonce maintenue localement sur le dispositif client.

4. Procédé selon la revendication 3, dans lequel les enregistrements de Nonce dans la liste de Nonce maintenue localement sur le dispositif client sont marqués comme étant disponibles par défaut ; et
le procédé comprend en outre :
le marquage des enregistrements de Nonce disponibles comme étant indisponibles dans la liste de Nonce après l'obtention des enregistrements de Nonce disponibles pour la pluralité de transactions à partir de la liste de Nonce maintenue localement sur le dispositif client.

5. Procédé selon la revendication 4, comprenant en outre :
la détermination si un message de notification indiquant que la transaction est traitée est reçu à partir du dispositif nœud ; et
si oui, l'augmentation monotone d'une valeur de Nonce dans l'enregistrement de Nonce disponible sur la base d'une amplitude prédéterminée, et le remarquage de l'enregistrement de Nonce disponible comme étant disponible dans la liste de Nonce après l'augmentation monotone de la valeur de Nonce.

6. Procédé selon la revendication 1, dans lequel le dispositif client est un dispositif client multithread, et la quantité d'enregistrements de Nonce dans la liste de Nonce indique une capacité d'exécution de transactions du compte utilisateur en parallèle.

7. Procédé selon la revendication 6, dans lequel l'enregistrement de Nonce comprend en outre un identifiant d'index de l'enregistrement de Nonce.

8. Procédé de traitement de transactions basé sur une chaîne de blocs, appliqué à un dispositif nœud dans une chaîne de blocs, dans lequel le procédé comprend :
la réception de transactions qui sont initiées par un utilisateur par l'intermédiaire d'un compte utilisateur et envoyées par un dispositif client, dans lequel les transactions comprennent une pluralité de groupes de transactions comprenant chacun une pluralité de transactions avec un même identifiant de groupe, dans lequel des identifiants de groupe ajoutés par le dispositif client à la pluralité de groupes de transactions indiquent un ordre d'exécution de la pluralité de groupes de transactions, dans lequel un ensemble de listes de Nonce est maintenu dans la chaîne de blocs, l'ensemble de listes de Nonce comprend des listes de Nonce correspondant à plusieurs comptes utilisateur, la liste de Nonce comprend une pluralité d'enregistrements de Nonce, chaque enregistrement de Nonce comprend un identifiant de groupe et une valeur de Nonce, et l'identifiant de groupe ajouté à la transaction envoyée par le dispositif client est compris dans un enregistrement de Nonce disponible obtenu par le dispositif client à partir d'une liste de Nonce correspondant au compte utilisateur ;
la détermination si les transactions envoyées par le dispositif client comprennent une pluralité de transactions avec le même identifiant de groupe, dans lequel le même identifiant de groupe est ajouté par le dispositif client lors de la détermination que la pluralité de transactions doivent être exécutées en parallèle ;
si oui, l'exécution de la pluralité de groupes de transactions dans l'ordre d'exécution indiqué par les identifiants de groupe de la pluralité de groupes de transactions, dans lequel la pluralité de transactions avec le même identifiant de groupe sont exécutées en parallèle après le traitement de la pluralité de transactions ;
la mise en correspondance de l'enregistrement de Nonce disponible ajouté à la transaction envoyée par le dispositif client avec un enregistrement de Nonce dans la liste de Nonce qui correspond au compte utilisateur et est maintenu dans la chaîne de blocs ; et
le traitement de la transaction si l'enregistrement de Nonce disponible correspond à un quelconque enregistrement de Nonce cible dans la liste de Nonce.

9. Procédé selon la revendication 8, comprenant en outre :
si l'enregistrement de Nonce disponible correspond à un quelconque enregistrement de Nonce cible dans la liste de Nonce, l'augmentation monotone d'une valeur de Nonce dans l'enregistrement de Nonce cible sur la base d'une amplitude prédéterminée ; et
le renvoi d'un message de notification indiquant que la transaction est traitée au dispositif client, dans lequel de préférence l'enregistrement de Nonce comprend en outre un identifiant d'index de l'enregistrement de Nonce.

10. Dispositif électronique, comprenant :
un processeur ; et
une mémoire, configurée pour stocker une instruction exécutable par machine, dans lequel
en lisant et en exécutant l'instruction exécutable par machine qui est stockée dans la mémoire et correspond à une logique de commande de traitement de transactions basée sur une chaîne de blocs, le processeur est configuré pour réaliser un procédé selon l'une quelconque des revendications précédentes.
